# EUROPEAN PATENT APPLICATION

(11) **EP 1 750 218 A2**
(43) Date of publication of application: **07.02.2007**
(21) Application number: 06015905.0
(22) Date of filing: 31.07.2006
(51) Int. Cl.: G06F 21/20

(54) **Terminal apparatus, control method of terminal apparatus, control program for terminal apparatus, and computer readable recording medium for storing control program for terminal apparatus**

(30) Priority: 02.08.2005 JP 2005224088
(71) Applicant: SEIKO EPSON CORPORATION, Shinjuku-ku, Tokyo 163-0811 (JP)
(72) Inventor: Kurata, Tomoyuki, c/o Seiko Epson Corporation, Suwa-shi, Nagano-ken 392-8502 (JP)
(74) Representative: HOFFMANN EITLE

(57) **Abstract**

A terminal apparatus which stores secret information includes: available area information storage means; current position information generating means for generating current position information which indicates a current position of the terminal apparatus when the terminal apparatus is activated; available area inside/outside determining means; available area outside power supply disconnecting means; authenticating means for determining whether or not authentication of an authorized person permitted to use the terminal apparatus is possible using the terminal apparatus user's authentication information when the terminal apparatus is restarted once power supply is disconnected by the available area outside power supply disconnecting means; and authentication impossible power supply disconnecting means for disconnecting the power supply of the terminal apparatus when the authenticating means determines that the authentication is impossible.

## Description

This application claims the priorities benefit under 35 U.S.C.§ 119 of Japanese Patent Application No.2005-224088 filedonAug2, 2005, which is hereby incorporated in its entirety by reference.
BACKGROUND
1. Technical Field
The present invention relates to a terminal apparatus with an unauthorized use prevention function, a control method of the terminal apparatus, a control program for the terminal apparatus, and a computer readable recording medium for storing the control program for the terminal apparatus.
2. Related Art

It is desirable that trade secrets and technical secrets (hereinafter, referred to as secret information) stored in a personal computer and the like are used by a person who is permitted to use them (hereinafter, referred to as authorized person) only in authorized mode (hereinafter, referred to as allowed mode). However, such secret information may be abstracted from a personal computer by a person other than an authorized person, or an authorized person may use secret information stored in a personal computer and the like in a mode other than the allowed mode (hereinafter, referred to as unauthorized use).

As a result, a technology for positioning a position of a mobile terminal and limiting functions of the mobile terminal according to the location of the position with respect to the limitation of the functions of the mobile terminal has been proposed (e.g., JP-A-2000-224661 (Fig. 1 and the like).

However, according to the aforementioned prior art, there is a problem that a person who will attempt unauthorized use (hereinafter, referred to as unauthorized user) can obtain secret information from a mobile terminal when the unauthorized user enters an area where the functions of the mobile terminal are not limited (hereinafter, referred to as inside an available area) after using the mobile terminal in a function limited area (hereinafter, referred to as outside an available area) where the functions of the mobile terminal are limited.

### SUMMARY

Therefore, an advantage of some aspects of the invention is to provide a terminal apparatus which can make it impossible to obtain secret information fromamobile terminal even if an unauthorized user enters inside an available area after using the mobile terminal outside the available area, a control method of the terminal apparatus, a control program for the terminal apparatus, and a computer readable recording medium for storing the control program for the terminal apparatus.

In order to achieve the above object, a terminal apparatus which stores secret information according to a first aspect of the invention includes: available area information storage means for storing available area information which indicates an available area of the terminal apparatus; current position information generating means for generating current position information which indicates a current position of the terminal apparatus when the terminal apparatus is activated; available area inside/outside determining means for determining whether or not a current position indicated in the current position information falls within the available area; available area outside power supply disconnecting means for disconnecting the power supply of the terminal apparatus when the available area inside/outside determining means determines that the current position does not fall within the available area; authenticating means for determining whether or not authentication of an authorized person permitted to use the terminal apparatus is possible using the terminal apparatus user's authentication information when the terminal apparatus is restarted once power supply is disconnected by the available area outside power supply disconnecting means; and authentication impossible power supply disconnecting means for disconnecting the power supply of the terminal apparatus when the authenticating means determines that the authentication is impossible.

With the structure according to the first aspect of the invention, the terminal apparatus can determine whether or not the current position falls within the available area using the available area inside/outside determining means.

In addition, the terminal apparatus can disconnect the power supply of the terminal apparatus using the available area outside power supply disconnecting means when the current position does not fall within the available area.

Therefore, the terminal apparatus can prevent the secret information from being used by an unauthorized user outside the available area.

The terminal apparatus can authenticate an authorized user permitted to use the terminal apparatus using the terminal apparatus user' s authentication information using the authenticating means when the terminal apparatus is restarted once the power supply is disconnected by the available area outside power supply disconnecting means.

In addition, the terminal apparatus can disconnect the power supply of the terminal apparatus using the authentication impossible power supply disconnecting means when authentication by the authenticating means is impossible.

Therefore, the terminal apparatus disconnects the power supply unless authentication is performed by the authenticatingmeans even if the terminal apparatus falls within the available area after disconnecting the power supply outside the available area.

As a result, it is possible to make it impossible to obtain secret information from the terminal apparatus even if an unauthorized user falls within the available area after using the terminal apparatus outside the available area.

A second aspect of the invention is a terminal apparatus with a structure according to the first aspect of the invention, wherein usage history information recording means for recording the current position information, dates and times at which the current position information is generated, and the identification information.

With the structure according to the second aspect of the invention, the terminal apparatus can retain records of a person, time, and place that the terminal apparatus is used using the usage history information recording means.

This works as psychological intimidation for a user of the terminal apparatus in terms of use of the terminal apparatus outside the available area, allowing prevention of unauthorized use from occurring.

A third aspect of the invention is a terminal apparatus with the structure according to any of the first and the second aspect of the invention includes current position information transmitting means for transmitting the current position information to a predetermined secret information management apparatus when the available area inside/outside determining means determines that a current position of the terminal apparatus is outside the available area.

With the structure according to the third aspect of the invention, the terminal apparatus can transmit the current position information to the secret information management apparatus using the current position information transmitting means when the terminal apparatus is used outside the available area.

Accordingly, the secret information management apparatus can inform a user (manager) of the fact that the terminal apparatus is used at a certain place outside the available area.

A fourth aspect of the invention is a terminal apparatus with the structure according to any of the first through the third aspect of the invention includes secret information erasing means for erasing the secret information when authentication by the authenticating means is impossible.

With the structure according to the fourth aspect of the invention, the terminal apparatus can reliably prevent the secret information from being used by an unauthorized user using the secret information erasing means.

In order to achieve the above object, a control method of a terminal apparatus according to a fifth aspect of the invention includes the steps of: generating current position information which indicates a current position of a terminal apparatus by means of the terminal apparatus which stores secret information when the terminal apparatus is activated; determining available area inside or outside for determining whether or not a current position of the terminal apparatus indicated in the current position information falls within an available area of the terminal apparatus by means of the terminal apparatus; disconnecting available area outside power supply for disconnecting the power supply of the terminal apparatus by means of the terminal apparatus when it is determined that the current position does not fall within the available area at the step of determining available area inside or outside; authenticating for determining whether or not authentication of an authorized person permitted to use the terminal apparatus is possible using the terminal apparatus user' s authentication information by means of the terminal apparatus when the terminal apparatus is restarted once power supply is disconnected at the step of disconnecting available area outside power supply; and disconnecting authentication impossible power supply for disconnecting the power supply of the terminal apparatus by means of the terminal apparatus when it is determined that authentication is impossible at the step of authenticating.

With the structure according to the fifth aspect of the invention, as with the first aspect of the invention, it is possible to make it impossible to obtain secret information from the terminal apparatus even if an unauthorized user falls within the available area after using the terminal apparatus outside the available area.

In order to achieve the above obj ect, a control program for a terminal apparatus according to a sixth aspect of the invention instructs a computer to perform the steps of: generating current position information which indicates a current position of a terminal apparatus by means of the terminal apparatus which stores secret information when the terminal apparatus is activated; determining available area inside or outside for determining whether or not a current position of the terminal apparatus indicated in the current position information falls within an available area of the terminal apparatus by means of the terminal apparatus; disconnecting available area outside power supply for disconnecting the power supply of the terminal apparatus by means of the terminal apparatus when it is determined that the current position does not fall within the available area at the step of determining available area inside or outside; authenticating for determining whether or not authentication of an authorized person permitted to use the terminal apparatus is possible using the terminal apparatus user's authentication information by means of the terminal apparatus when the terminal apparatus is restarted once power supply is disconnected at the step of disconnecting available area outside power supply; and disconnecting authentication impossible power supply for disconnecting the power supply of the terminal apparatus by means of the terminal apparatus when it is determined that authentication is impossible at the step of authenticating.

In order to achieve the above object, a computer readable recording medium for storing a control program for a terminal apparatus according to a seventh aspect of the invention instructs a computer to perform the steps of: generating current position information which indicates a current position of a terminal apparatus by means of the terminal apparatus which stores secret information when the terminal apparatus is activated; determining available area inside or outside for determining whether or not a current position of the terminal apparatus indicated in the current position information falls within an available area of the terminal apparatus by means of the terminal apparatus; disconnecting available area outside power supply for disconnecting the power supply of the terminal apparatus by means of the terminal apparatus when it is determined that the current position does not fall within the available area at the step of determining available area inside or outside; authenticating for determining whether or not authentication of an authorized person permitted to use the terminal apparatus is possible using the terminal apparatus user's authentication information by means of the terminal apparatus when the terminal apparatus is restarted once power supply is disconnected at the step of disconnecting available area outside power supply; and disconnecting authentication impossible power supply for disconnecting the power supply of the terminal apparatus by means of the terminal apparatus when it is determined that authentication is impossible at the step of authenticating.

### BRIEF DESCRIPTION OF THE DRAWINGS

The invention will be described with reference to the accompanying drawings, wherein like numbers reference like elements.

Fig. 1 schematically shows an unauthorized use preventing system in an embodiment according to the invention.

Fig. 2 schematically shows an example of available area and the like.

Fig. 3 schematically shows a main hardware structure of a PC.

Fig. 4 schematically shows a main software structure of the PC.

Fig. 5 schematically shows a flowchart of an operation example of the unauthorized use preventing system.

### DESCRIPTION OF EXEMPLARY EMBODIMENTS

Hereinafter, with reference to the drawings, the preferred exemplary embodiments of the invention will be described in detail.

The following embodiments are given various limitations that are preferable technically because they are the exemplary specific examples of the invention, however, the scope of the invention is not limited to these aspects unless there is a particular description to limit the invention in the following description.

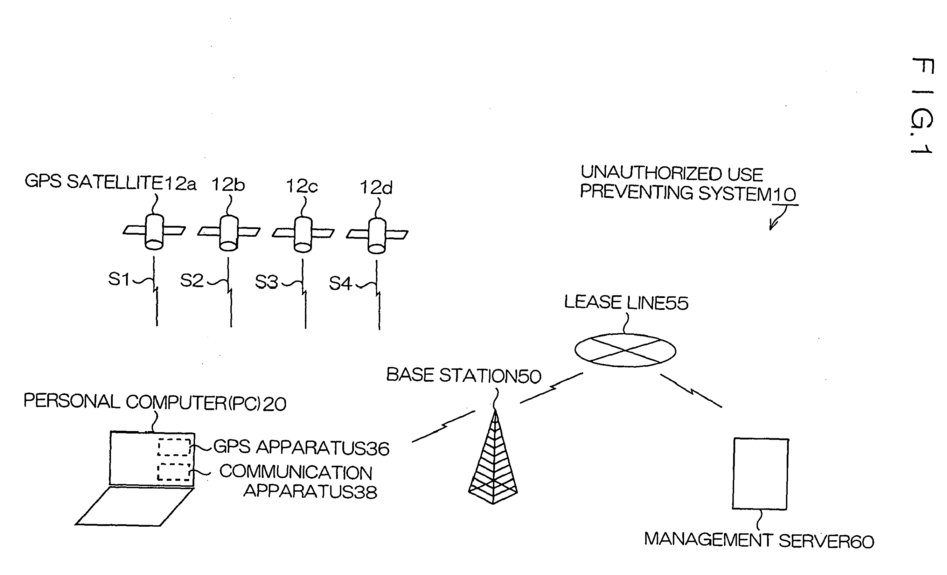

Fig. 1 schematically illustrates an unauthorized use preventing system 10 according to an embodiment of the invention.

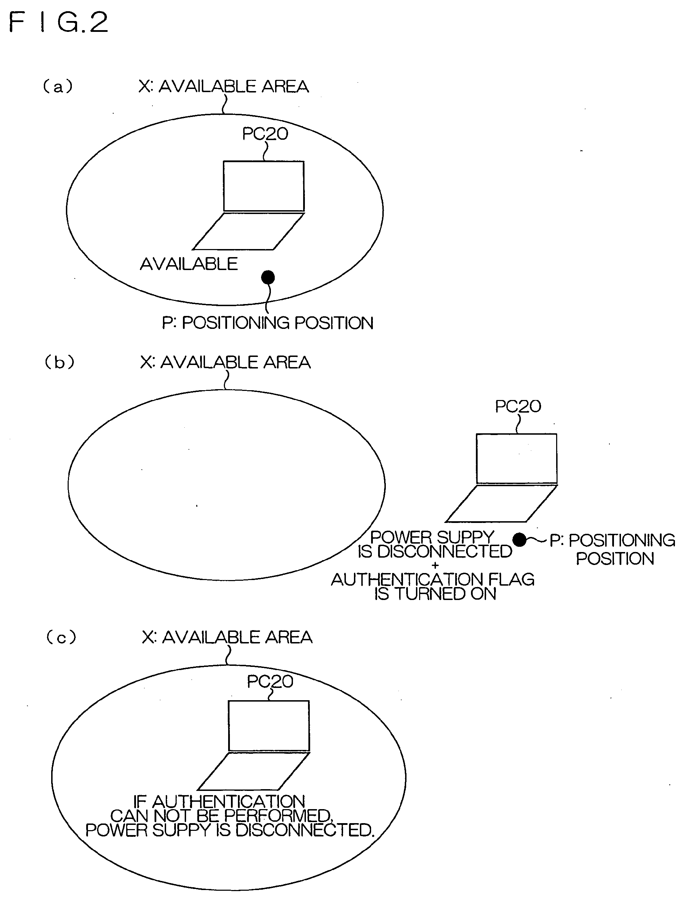

Fig. 2 illustrates an example of an area X and the like.

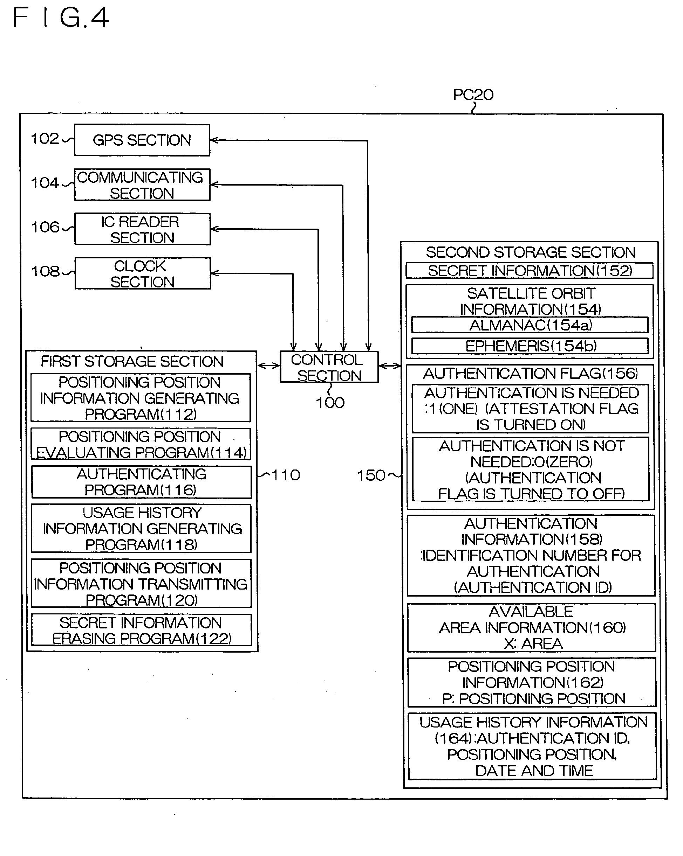

As illustrated in Fig. 1, the unauthorized use preventing system 10 includes a personal computer 20 (hereinafter, referred to as PC 20). The PC 20 stores secret information 152 (see Fig. 4) such as trade secrets and technical secrets. The PC 20 is an example of terminal apparatus.

The PC 20 is only available within an available area X (hereinafter, referred to as area X) in Fig. 2.

The PC 20 resides in a certain company, and certain employees of the company are permitted to use it. The employees permitted to use the PC 20 have a unique authentication identification number (hereinafter, referred to as authentication ID), respectively. Persons who are permitted to use the PC 20 are referred to as authorized persons.

In addition, the PC 20 includes a GPS (Global Positioning System) apparatus 36, allowing reception of signals, such as S1, S2, S3 and S4 from GPS satellites 12a, 12b, 12c and 12d.

The PC 20 also includes a communication apparatus 38, allowing communication with a management server 60 via a base station 50 and a lease line 55. The management server 60 is an example of secret information management apparatus. The management server 60 also resides in a company, and manages the availability of the PC 20.

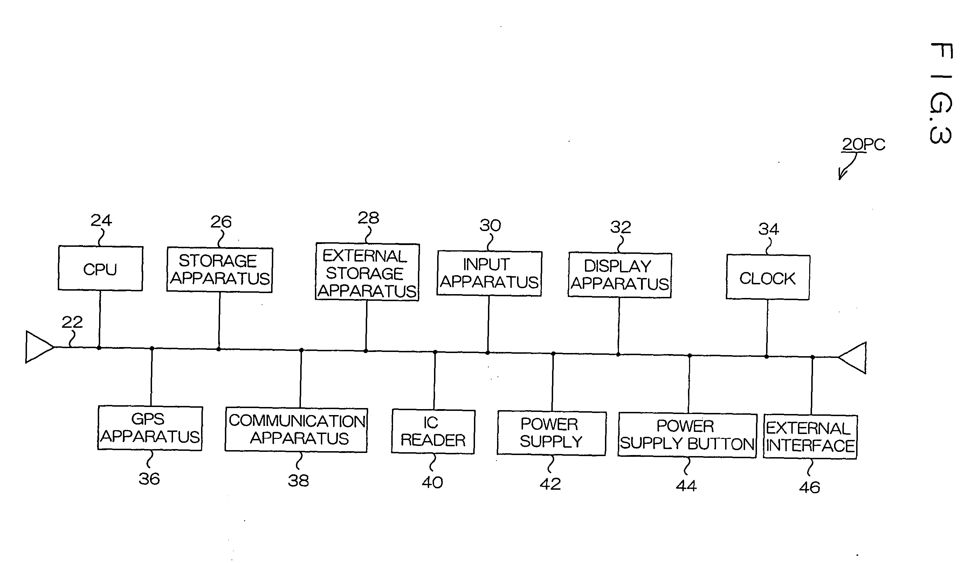

It should be noted that the PC 20 is described as an example of the terminal apparatus, however, the terminal apparatus may be a mobile terminal (portable mobile terminal) for storing secret information, such as a projector, a printer, a cellular phone, a PHS (Personal Handy-phone System), PDA (Personal Digital Assistance), or the like.
Main Hardware Structure of PC 20
Fig. 3 schematically illustrates a main hardware structure of the PC 20.

As illustrated in Fig. 3, the PC 20 is equipped with a bus 22.

A CPU (Central Processing Unit) 24, a storage apparatus 26, an external storage apparatus 28, and the like are connected with the bus 22. The storage apparatus 26 may be a RAM (Random Access Memory), a ROM (Read Only Memory), or the like. The external storage apparatus 28 may be a HDD (Hard Disk Drive) or the like.

In addition, an input apparatus 30 for inputting each piece of information, a display apparatus 32 for displaying each piece of information, and a clock 34 for calculating times and dates are connected with the bus 22.

The GPS apparatus 36 and the communication apparatus 38 are also connected with the bus 22.

An IC reader 40 is also connected with the bus 22. The IC reader 40 is an apparatus for reading information from IC cards of terminal 20 users.

A power supply 42, a power supply button 44, and an external interface 46 are also connected with the bus 22.
Main Software Structure of PC 20
Fig. 4 schematically illustrates a main software structure of the PC 20.

As illustrated in Fig. 4, the PC 20 includes a control section 100 for controlling each section, a GPS section 102 corresponding to the GPS apparatus 36 in Fig. 3, a communicating section 104 corresponding to the communication apparatus 38, an IC reader section 106 corresponding to the IC reader 40, a clock section 108 corresponding to the clock 34, and the like.

As illustrated in Fig. 4, the PC 20 also includes a first storage section 110 for storing each program and a second storage section 150 for storing each piece of information.

As illustrated in Fig. 4, the PC 20 stores the secret information 152 in the second storage section 150. The secret information 152 is an example of secret information, such as information which indicates trade secrets and technical secrets.

As illustrated in Fig. 4, the PC 20 stores satellite orbit information 154 in the second storage section 150. The satellite orbit information 154 includes almanac 154a which indicates rough satellite orbits of all GPS satellites 12a and the like (see Fig. 1), and ephemeris 154b which indicates accurate satellite orbits of each satellite 12a or the like. The PC 20 uses the satellite orbit information 154 for positioning.

As illustrated in Fig. 4, the PC 20 stores an authentication flag 156 in the second storage section 150. When the authentication flag 156 is "1", the authentication flag is turned on, which means that authentication is needed. In other words, when the authentication flag 156 is "1", the power supply 42 (see Fig. 3) is disconnected unless the PC 20 performs authentication.

On the other hand, when the authentication flag 156 is "0", the authentication flag is turned off, which means that authentication is not needed. In other words, when the authentication flag 156 is "0", the PC 20 does not perform authentication but does continue processing.

In addition, as illustrated in Fig. 4, the PC 20 stores authentication information 158 in the second storage section 150. The authentication information 158 includes authentication IDs corresponding to one or more of persons who are permitted to use the PC 20.

In addition, as illustrated in Fig. 4, the PC 20 stores available area information 160 in the second storage section 150. The available area information 160 is information which indicates an area X where the PC 20 is available. The area X is an example of available areas. The second storage section 150 is an example of available area information storage means.

As illustrated in Fig. 4, the PC 20 stores a positioning position information generating program 112 in the first storage section 110. The positioning position information generating program 112 is a program that the control section 100 generates positioning position information 162 which indicates a positioning position P based on the signals S1 and the like obtained using the GPS section 102. The positioning position information 162 is an example of current position information. The positioning position information generating program 112 and the control section 100 is an example of the current position information generating means.

More specifically, the control section 100 refers to the almanac 154a, and identifies the GPS satellites 12a and the like which are observable at the current time clocked by the clock 34 (see Fig. 3). The control section 100 then receives the signals S1 and the like from, for example, three or more of GPS satellites 12a and the like using the GPS section 102, and calculates a pseudo range which is the distance between each GPS satellite 12a or the like and the PC 20 based on a delay time which is a difference between the time at which the signal S1 or the like is transmitted from each GPS satellite 12a or the like and the time at which it is received by the PC 20. The ephemeris 154b and the above-mentioned pseudo range are used for positioning the current position to calculate the positioning position P.

The control section 100 stores the generated positioning position information 162 in the second storage section 150. The positioning position information 162 is information which indicates the coordinates of the positioning position P defined by, for example, a latitude, a longitude, and an altitude.

The invention is not limited to this embodiment, the PC 20 may generate the positioning position information 162 through base station positioning which uses communication radio waves from multiple base stations 50, or through short-distance wireless positioning which uses multiple short-distance wireless radio waves (radio waves transmitted from a wireless LAN or the like).

As illustrated in Fig. 4, the PC 20 stores a positioning position evaluating program 114 in the first storage section 110. The positioning position evaluating program 114 is a program that the control section 100 determines whether or not the positioning position P indicated in the aforementioned positioning position information 162 falls within the area X. In other words, the positioning position evaluating program 114 and the control section 100 is an example of the available area inside/outside determining means.

In addition, the positioning position evaluating program 114 is a program that the control section 100 disconnects the power supply 42 (see Fig. 3) when it is determined that the positioning position P does not fall within the area X. In other words, the positioning position evaluating program 114 and the control section 100 is an example of the available area outside power supply disconnecting means.

More specifically, as illustrated in Fig. 2(a), the control section 100 does not disconnect the power supply 42 but does continue processing when the positioning position P falls within the area X.

On the other hand, as illustrated in Fig. 2(b), the control section 100 disconnects the power supply 42 when the positioning position P does not fall within the area X.

As illustrated in Fig. 4, the PC 20 stores an authenticating program 116 in the first storage section 110. The authenticating program 116 is a program that the control section 100 determines whether or not authentication of an authorized person permitted to use the PC 20 is possible using the PC 20 user' s authentication ID when the power supply button 44 (see Fig. 3) is pressed, the power supply 42 is connected, and the PC 20 is restarted once it is determined that the positioning position P does not fall within the area X and the power supply 42 is thereby disconnected. The authentication ID is an example of identification information. The authenticating program 116 and the control section 100 is an example of authenticating means.

More specifically, the control section 100 reads information from IC cards (not shown in the drawing) of users using the IC reader 40 (see Fig. 3). When a read authentication ID matches with any of authentication IDs indicated in the authentication information 158, it is determined that authentication of an authorized person is possible. When it matches with no authentication ID, it is determined that authentication is impossible.

It should be noted that the IC reader 40 reads information from, for example, a contact type IC card, but not limited to this, and it may read information by receiving wireless radio waves from a non-contact type IC card.

Also, the authenticating program 116 is a program that the control section 100 disconnects the power supply 42 when it is determined that the authentication of an authorized person is impossible. In other words, the authenticating program 116 and the control section 100 is an example of the authentication impossible power supply disconnecting means.

In addition, the control section 100 disconnects the power supply 42 when no authentication ID is entered within a predetermined time, for example, 10 seconds (s).

Therefore, for example, once the power supply 42 of the PC 20 is disconnected outside the area X (see Fig. 2 (b)), the power supply 42 is disconnected unless authentication is performed even if the PC 20 falls within the area X as illustrated in Fig. 2(c).

As illustrated in Fig. 4, the PC 20 stores a usage history information generating program 118 in the first storage section 110. The usage history information generating program 118 is a program that the control section 100 generates usage history information 164 by recording the positioning position information 162, dates and times at which the positioning position information 162 is generated, and authentication IDs read from the IC cards of the users. In other words, the usage history information generating program 118 and the control section 100 is an example of usage history information generating means.

The PC 20 clocks dates and times at which the positioning position information 162 is generated using the clock section 108.

As illustrated in Fig. 4, the PC 20 stores a positioning position information transmitting program 120 in the first storage section 110. The positioning position information transmitting program 120 is a program that the control section 100 transmits the positioning position information 162 to the management server 60 (see Fig. 1) when it is determined that the positioning position P does not fall within the area X. In other words, the positioning position information transmitting program 120 and the control section 100 is an example of the current position information transmitting means.

As illustrated in Fig. 4, the PC 20 stores a secret information erasing program 122 in the first storage section 110. The secret information erasing program 122 is a program that the control section 100 erases the secret information 152 when authentication of an authorized user is impossible. In other words, the secret information erasing program 122 and the control section 100 is an example of secret information erasing means.

The unauthorized use preventing system 10 is configured as described above.

As described above, the PC 20 can determine whether or not the positioning position P falls within the area X.

The PC 20 can disconnect the power supply 42 (see Fig. 3) when the positioning position P does not fall within the area X.

This allows the PC 20 to prevent the secret information 152 (see Fig. 4) from being used by an unauthorized user outside the area X.

The PC 20 can also determine whether or not authentication of an authorized user permitted to use the PC 20 is possible using the PC 20 user's authentication ID when the PC 20 is restarted once it is determined that the positioning position P does not fall within the area X and the power supply 42 is thereby disconnected.

The PC 20 can then disconnect the power supply 42 when authentication of an authorized user is impossible.

Therefore, the PC 20 disconnects the power supply 42 unless authentication is performed even if the PC 20 falls within the area X after disconnecting the power supply 42 outside the area X.

As a result, it is possible to make it impossible to obtain secret information from the PC 20 even if an unauthorized user falls within the area X after using the PC 20 outside the area X.

In addition, since the PC 20 can generate the usage history information 164 (see Fig. 4), a record of a person, time, and place that the PC 20 is used can be retained.

This works as psychological intimidation for a user of the PC 20 in terms of use of the PC 20 outside the area X, allowing prevention of unauthorized use from occurring.

In addition, the PC 20 can transmit the positioning position information 162 to the management server 60 when the PC 20 is used outside the area X.

Accordingly, the management server 60 can inform a user (manager) of the fact that the PC 20 is used at a certain place outside the area X.

Moreover, since the PC 20 erases the secret information 152 when authentication is impossible, it is certainly possible to prevent the secret information 152 from being used by an unauthorized user.

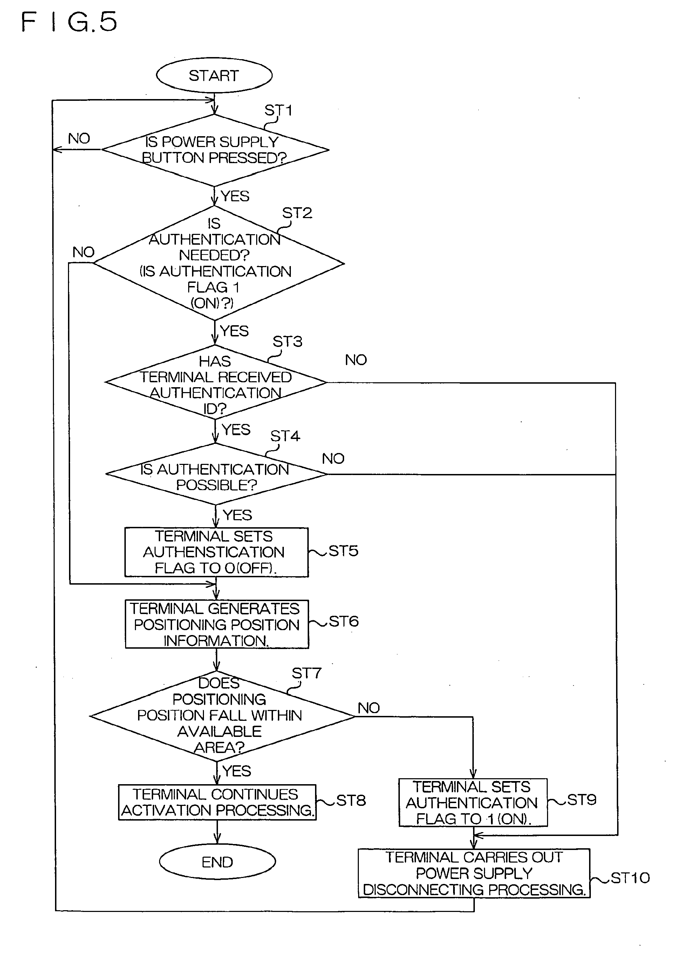

Operation Example of Unauthorized Use Preventing system 10
The structure of the unauthorized use preventing system 10 in the embodiment according to the invention is described above. The operation example is hereinafter described mainly using Fig. 5.

Fig. 5 schematically illustrates a flowchart of an operation example of the unauthorized use preventing system 10 according to the embodiment.

The PC 20 determines whether or not the power supply button 44 (see Fig. 3) is pressed (step ST1 in Fig. 5). When it determines that the power supply button 44 is pressed, it determines whether or not authentication is needed (step ST2) .

More specifically, in step ST2, the PC 20 determines whether or not the authentication flag is 1.

When the PC 20 determines that the authentication flag is 1 in step ST2, it then determines whether or not an authentication ID is received (step ST3).

When the PC 20 determines that an authentication ID has not been received within 10 seconds (s) for example in step ST3, power supply disconnecting processing is carried out (step ST10).

On the other hand, when the PC 20 determines that an authentication ID has been received within 10 seconds (s) in step ST3, it then determines whether or not authentication is possible (step ST4). The aforementioned steps ST3 and ST4 is an example of the step of authenticating.

When the PC 20 determines that authentication is impossible in step ST4, power supply disconnecting processing is carried out (step ST10). The step ST10 is an example of the step of disconnecting the authentication impossible power supply.

When the PC 20 determines that authentication is possible in step ST4, the authentication flag is set to 0 (step ST5).

Subsequently, the PC 20 generates the positioning position information 162 (see Fig. 4) (step ST6). The step ST6 is an example of the step of generating current position information. It should be noted that even when the PC 20 determines that authentication is not needed in the aforementioned step ST2, the processing proceeds to the step ST6, and the positioning position information 162 is generated.

Next, the PC 20 determines whether or not the positioning position P falls within the available area X (step ST7). The step ST7 is an example of the step of determining available area inside/outside.

When the PC 20 determines that the positioning position P falls within the available area X in step ST7, it continues activation processing (step ST8).

. On the other hand, when the PC 20 determines that the positioning position P does not fall within the available area X in step ST7, the authentication flag is set to 1 (step ST9), and the power supply disconnecting processing is carried out (step ST10). The step ST10 is an example of the step of disconnecting the available area outside power supply.

As described above, it is possible to make it impossible to obtain secret information from the PC 20 even if an unauthorized user falls within the area X after using the PC 20 outside the area X.

Program and Computer Readable Recording Medium and the like
It is possible to provide a control program for a terminal apparatus, instructing a computer to perform the steps of generating the current position information of the aforementioned operation example, determining the available area inside/outside, disconnecting the available area outside power supply, authenticating, disconnecting the authentication impossible power supply, and the like.

It is also possible to provide a computer readable recording medium and the like on which such control program and the like for the terminal apparatus are recorded.

A program storing medium used to install such control program and the like for the terminal apparatus on the computer, and enable them to be performed by the computer may be not only a package medium such as a flexible disc such as a floppy (R), a CD-ROM (Compact Disc Read Only Memory), a CD-R (Compact Disc Recordable), a CD-RW (Compact Disc-Rewritable), a DVD (Digital Versatile Disc) or the like, but also a semiconductor memory, a magnetic disc, or a magnetic optical disc in which a program is temporarily or permanently stored.

The present invention is not limited to the above-described respective embodiments. Further, the above-described respective embodiments may be combined with each other.

## Claims

1. A terminal apparatus which stores secret information, comprising:
available area information storage means for storing available area information which indicates an available area of the terminal apparatus;
current position information generating means for generating current position information which indicates a current position of the terminal apparatus when the terminal apparatus is activated;
available area inside/outside determining means for determining whether or not a current position indicated in the current position information falls within the available area;
available area outside power supply disconnecting means for disconnecting the power supply of the terminal apparatus when the available area inside/outside determining means determines that the current position does not fall within the available area;
authenticating means for determining whether or not authentication of an authorized person permitted to use the terminal apparatus is possible using the terminal apparatus user's authentication information when the terminal apparatus is restarted once power supply is disconnected by the available area outside power supply disconnecting means; and
authentication impossible power supply disconnecting means for disconnecting the power supply of the terminal apparatus when the authenticating means determines that the authentication is impossible.

2. The terminal apparatus according to claim 1, comprising usage history information recording means for recording the current position information, dates and times at which the current position information is generated, and the identification information.

3. The terminal apparatus according to either claim 1 or claim 2, comprising current position information transmitting means for transmitting the current position information to a predetermined secret information management apparatus when the available area inside/outside determining means determines that a current position of the terminal apparatus is outside the available area.

4. The terminal apparatus according to any of claims 1 through 3, comprising secret information erasing means for erasing the secret information when authentication by the authenticating means is impossible.

5. A control method of a terminal apparatus, comprising the steps of:
generating current position information which indicates a current position of a terminal apparatus by means of the terminal apparatus which stores secret information when the terminal apparatus is activated;
determining available area inside or outside for determining whether or not a current position of the terminal apparatus indicated in the current position information falls within an available area of the terminal apparatus by means of the terminal apparatus;
disconnecting available area outside power supply for disconnecting the power supply of the terminal apparatus by means of the terminal apparatus when it is determined that the current position does not fall within the available area at the step of determining available area inside or outside;
authenticating for determining whether or not authentication of an authorized person permitted to use the terminal apparatus is possible using the terminal apparatus user's authentication information by means of the terminal apparatus when the terminal apparatus is restarted once power supply is disconnected at the step of disconnecting available area outside power supply; and
disconnecting authentication impossible power supply for disconnecting the power supply of the terminal apparatus by means of the terminal apparatus when it is determined that authentication is impossible at the step of authenticating.

6. A control program for a terminal apparatus, instructing a computer to perform the steps of:
generating current position information which indicates a current position of a terminal apparatus by means of the terminal apparatus which stores secret information when the terminal apparatus is activated;
determining available area inside or outside for determining whether or not a current position of the terminal apparatus indicated in the current position information falls within an available area of the terminal apparatus by means of the terminal apparatus;
disconnecting available area outside power supply for disconnecting the power supply of the terminal apparatus by means of the terminal apparatus when it is determined that the current position does not fall within the available area at the step of determining available area inside or outside;
authenticating for determining whether or not authentication of an authorized person permitted to use the terminal apparatus is possible using the terminal apparatus user's authentication information by means of the terminal apparatus when the terminal apparatus is restarted once power supply is disconnected at the step of disconnecting available area outside power supply; and
disconnecting authentication impossible power supply for disconnecting the power supply of the terminal apparatus by means of the terminal apparatus when it is determined that authentication is impossible at the step of authenticating.

7. A computer readable recording medium for storing a control program for a terminal apparatus, instructing a computer to perform the steps of:
generating current position information which indicates a current position of a terminal apparatus by means of the terminal apparatus which stores secret information when the terminal apparatus is activated;
determining available area inside or outside for determining whether or not a current position of the terminal apparatus indicated in the current position information falls within an available area of the terminal apparatus by means of the terminal apparatus;
disconnecting available area outside power supply for disconnecting the power supply of the terminal apparatus by means of the terminal apparatus when it is determined that the current position does not fall within the available area at the step of determining available area inside or outside;
authenticating for determining whether or not authentication of an authorized person permitted to use the terminal apparatus is possible using the terminal apparatus user's authentication information by means of the terminal apparatus when the terminal apparatus is restarted once power supply is disconnected at the step of disconnecting available area outside power supply; and
disconnecting authentication impossible power supply for disconnecting the power supply of the terminal apparatus by means of the terminal apparatus when it is determined that authentication is impossible at the step of authenticating.
